# EUROPEAN PATENT SPECIFICATION

(11) **EP 0 947 382 B1**
(45) Date of publication and mention of the grant of the patent: **13.12.2006**
(21) Application number: 99105527.8
(22) Date of filing: 18.03.1999
(51) Int. Cl.: B60N 2/08

(54) **Longitudinal regulating device for vehicle seats**
Längsverstellvorichtung für Kraftfahrzeugsitze
Dispositif de réglage longitudinal de sièges de véhicules

(30) Priority: 31.03.1998 IT TO980279
(43) Date of publication of application: 06.10.1999
(73) Proprietor: Gallo, Sergio, 12060 Verduno (Cuneo) (IT)
(72) Inventor: Gallo, Sergio, 12060 Verduno (Cuneo) (IT)
(74) Representative: Lotti, Giorgio

(56) References cited:
- EP-A- 0 751 029
- US-A- 3 866 876
- US-A- 5 286 076

## Description

The present invention refers to a longitudinal regulating device for vehicle seats.

As is well-known, the front seats of modern vehicles are provided with means which permit the regulation of their position in a longitudinal direction. With this aim, in fact, a pair of parallel guides is firmly fixed to the understructure of the vehicle for each seat, these parallel guides function as supports and guides for a corresponding pair of mobile guides, which are fixedly connected to the seat itself.

Such regulating systems usually also comprise sliding means such as rollers and slide blocks, interposed between the fixed guides and the mobile guides to facilitate the movement of the seat, and hooking means to firmly secure the fixed guides to the mobile guides when regulation has been achieved.

Some well-known alternatives currently in use provide for the course of the mobile guide to be halted by means of the use of mechanisms. Such mechanisms usually comprise a toothed bolt secured to the mobile guide; the bolt, pushed upwards by a spring, engages with the corresponding toothing of the fixed guide, hooking the seat in position.

Unhooking is achieved by means of a manual control activating a lever, usually in the form of a tubular handle, secured either to the right or the left mobile guide; overcoming the resistance offered by the spring which pushes the bolt, the latter disengages from the toothing of the fixed guide to permit the longitudinal movement of the seat. The unhooking lever is pivotally connected to the bolt; consequently, if the bolt does not engage in the toothed housing of the fixed guide once the position of the seat is regulated, the handle is prevented from returning to its resting position and as a result the second bolt does not enter into its own housing, so that the seat is not blocked into position.

The above-mentioned alternatives involve considerable costs both in terms of manufacturing processes and in terms of the equipment which has to be installed for manufacturing.

US 5286076 discloses a seat slide device including one elastically yieldable hooking/release device associated with the mobile guide; such device engages, under normal operating conditions, with the toothing of the fixed guide, hooking the mobile guide in the position; an handle acts directly on the hooking/release device when manually rotated in contrast to elastic means.

An aim of the present invention is to realise a perfected type of regulating device which permits both the containment of vertical, transverse and longitudinal clearance of the guides, in order to avoid sensations of instability which can be suffered by both driver and passenger, and the containment of noise when the car is being driven in the case that the seat is not loaded down by the weight of a passenger; this noise is caused in part by excessive clearance of the guides and by vibrations of the at the coupling points of the guides with the relative interfaces (the structural framework of the seat and the release handle or lever).

Another aim of the present invention is to propose a device which permits that the seat be blocked while eliminating the traditional bolt and equivalent devices.

A further aim of the present invention is to realise a reliable device, easily activated by means of a tubular handle or other type of lever which is not physically secured to the hooking device with the aim of avoiding that, at the stage when the lever is released (once the seat has been moved to the required position), the handle is prevented from returning to its initial position in the case that one of the devices does not engage with its own hooking housing.

A further aim of the present invention is to realise a reliable release device, easily activated by means of a tubular handle, without any clearance in the area of pivotal connection in order to eliminate noise caused by vibrations from the car when it is being driven.

For this and other aims and advantages, which will be better understood hereinafter, the present invention proposes the realisation of a device with the characteristics detailed in the independent claim 1 the preamble of which is disclosed in US-5.286.076; other important characteristics are detailed in the subordinate claims.

There will now be described the structural and functional characteristics of a preferred but not limiting embodiment of the device according to the present invention; reference is made to the accompanying drawings, in which;
- FIG. 1: is a perspective overall view of a device for regulating the longitudinal position of a vehicle seat;
- FIG. 2: is a transverse sectional view along the line II-II of the device in FIG. 1, in which some of the elements of the present invention are visible;
- FIG. 3: is an enlarged scale view of the central portion of the device shown in FIG. 1;
- FIG. 4: is an exploded view of the device according to the present invention complete with all its constructional and functional elements;
- FIGS. 5 and 6: are views of some of the particulars of the device according to the present invention in two different stages of assembly.

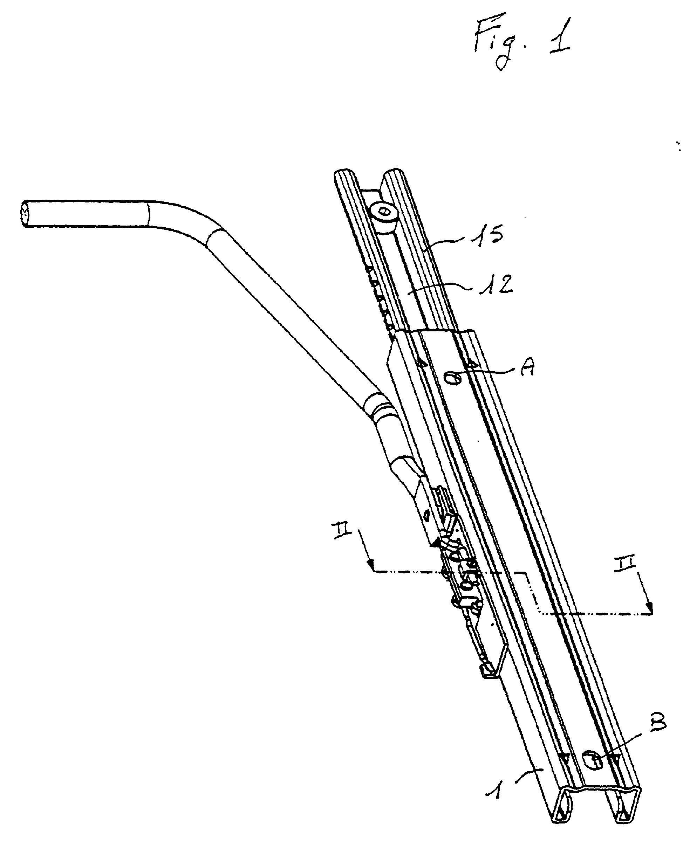

With reference initially to FIG. 1, With initial reference to FIG. 1, the numbers 12 and 1 respectively indicate a fixed longitudinal guide and a mobile guide, formed of metallic profiles, preferably steel, and shaped and coupled in such a way as to be able to slide in a longitudinal direction. The fixed guide 12 is secured to the floor (not illustrated) of the vehicle compartment by means of suitable fixing elements; similarly, the mobile guide is secured at the points A and B to the lower part of the structural framework of the vehicle seat (not illustrated) so that it is possible to regulate the longitudinal position of the seat inside the vehicle by making the upper mobile guides slide in relation to the lower fixed guides. For the sake of simplicity, only one pair of guides situated on one side of the vehicle seat is described and illustrated herein, it being understood that another pair of identical guides is provided for on the other side of the vehicle seat.

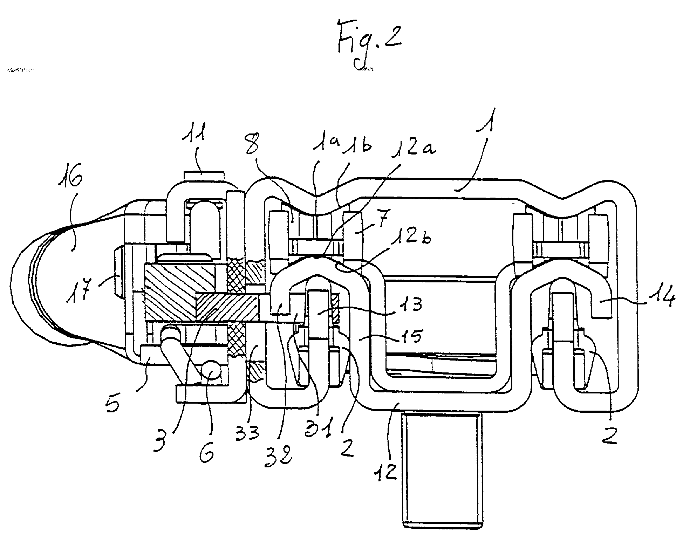

With reference to FIG. 2, the form of the guides 1 and 12 is shown in transverse section, of a well-known type and therefore not described in detail but only to such an extent as is necessary for the understanding of the present invention. The mobile guide 1 has a transverse section substantially in the shape of an upside down U; the edges 13 of the guide 1 are inwardly folded in a vertical direction so that they are thus contained on a longitudinal vertical plane delimited by the edges 14 of the fixed guide 12, which, instead, presents a transverse section in the shape of a U with its own edges 14 folded outwardly downwards.

The two guides 1, 12 respectively form a pair of longitudinal reliefs 1a, 12a facing each other and preferably of a bulbous form; each relief presents a pair of longitudinal surfaces 1b, 2b which converge and are joined by a rounded edge.

The surfaces 1b, 12b of the guides serve as support surfaces as well as surfaces for the rolling action of two pairs of rollers 8 interposed between the mobile guides and the fixed guides with the aim of facilitating the sliding action of the mobile guides and thus the regulation of the position of the seat.

Each pair of rollers is mounted in a spacing element 7 at the terminal ends of which are formed pivotally connected lateral housings in which the rollers roll in such a way that, rolling on the guides, they are maintained at a constant distance along the entire range permitted by the guides. When accomplishing this movement, the spacers 7 slide between the guides without any appreciable friction.

The function of containing transverse and vertical clearance is performed by a number of elastic slide blocks 2, preferably 4 to each pair of guides, which are snap fixed to the edges 13 of the mobile guide 1; in other words, two elastic slide blocks 2, longitudinally spaced between each other, are fixed to each edge 13.

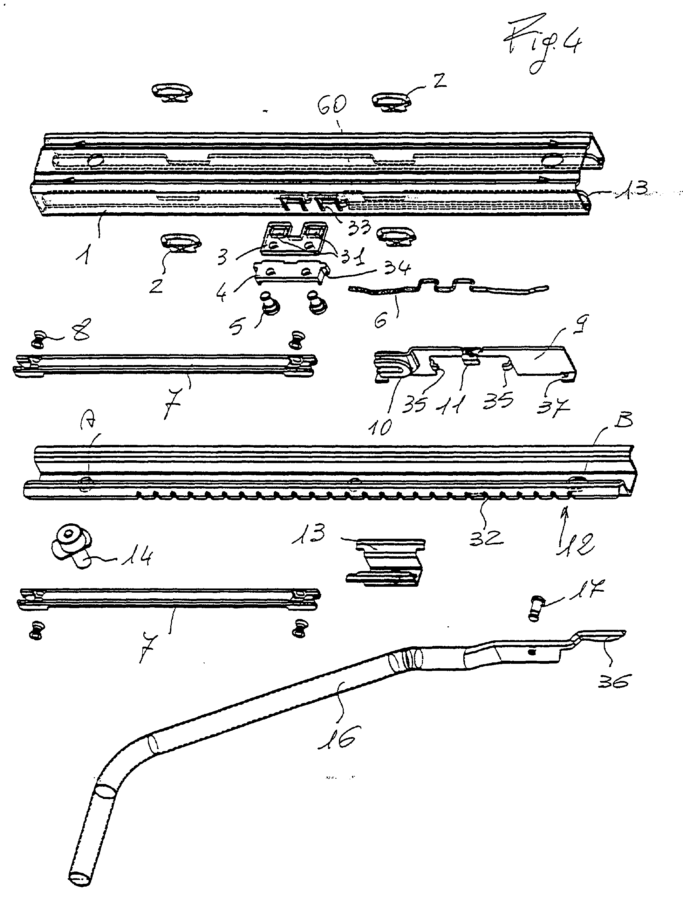

FIG. 4 shows an exploded view of all the elements which comprise the complete guide, including the hooking/release device, which form part of the object of the present invention. The entire view comprises particulars which have already been examined among which: the mobile guide 1, the fixed guide 12, the slide block 2 for compensating transverse and vertical clearance. In this specific case the hooking device for the seat is comprised of the following particulars: a rack 3, a plate 4 and two pins 5, as well as a spring 6 for thrusting the hooking device, apart from the spacer 7 and rollers 8 which have already been examined.

The group concerned also comprises a bracket 9, with a central turned back edge, provided with a rubber element 11 and an elastic gripper 10 on the end; there is also a central bracket 13 for halting the guide at the end of its forward/backward course: also shown is a fixing element 14 for securing the fixed guide to the floor of the vehicle by means of its holes A and B and a pin 17 for pivotally connecting the release lever 16.

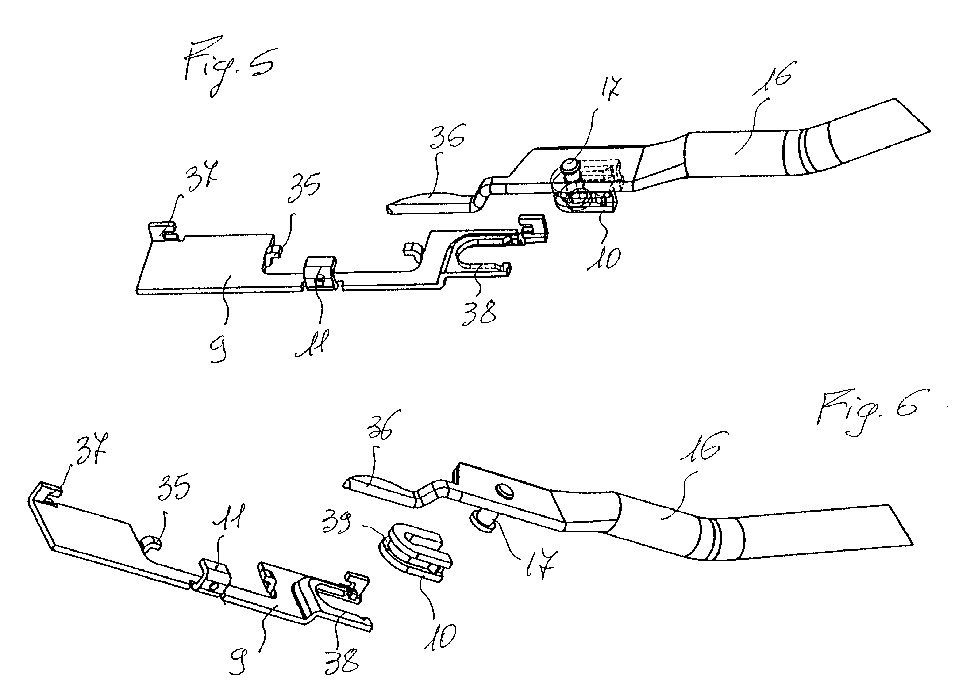

With reference to FIGS. 5 and 6 it can be observed that, in the assembly housing, the elastic gripper 10 is first snap fixed onto the pin 17 of the lever, then the forked end 38 of the bracket 9 is snap fixed into the corresponding housing 39 of the gripper 10, thus rendering the release lever 16 freely able to turn in relation to the bracket 9 on which it is assembled.

As can be observed above all with reference to FIGS. 1 - 4, the hooking function of the mobile guide 1 to the fixed guide 12 is guaranteed by the above-mentioned hooking device which, in this specific case, is comprised of elements 3, 4, 5 and 6. If desired, this device can be realised in a single piece by means of hot pressing or fusion etc.

The element 3 is provided with small windows 31 which insert into the toothed seats 32 of the fixed guide 12 and the containment seats 33 of the mobile guide.

In FIG. 2 can be observed one of the main characteristics of the present invention which is the fact that the small windows 31 of the element 3 extend beyond the toothed seats 32 of the fixed guide 12 to engage in the toothed portion 60 (FIG. 4) of the inner turned back edges 13 of the mobile guide 1. In this way the two seats 33 and the corresponding teeth 60 of the mobile guide 1 crossed by the small windows 31 of the element 3 function as stop beams for the teeth 32 of the fixed guide 12, eliminating clearance.

The element 4 is provided with lateral fins 34 which function as a guide for the whole device and which are contained by other lateral fins 35 of the component 9.

For operating purposes, the hooking device is comprised of a rack 3, plate 4 and a pin 5 and is thrust upwards by the spring 6 guaranteeing in this way the functional assembly of the three basic elements; the fixed guide 12, the mobile guide 1 and the hooking device 3, 4 and 5, which in this way also perform the function of recuperating longitudinal clearance.

The hooking device 3, 4 and 5, therefore, transversely crosses the mobile guide 1 with four transverse profiles 31 (two for each side, but their number may increased in the case of operational necessity), which come out of the mobile guide by means of respective fissures 33. These profiles, as has already been stated and as can be observed in FIG. 4, are in the form of small windows the openings of which are suitable for insertion between the teeth 32 of the fixed guide 12, bypassing the fissures 33 of the mobile guide 1, and thus hooking the latter in position.

The hooking device 3, 4 and 5 is normally engaged in its hooking position by means of preloading (as can be observed in FIG. 2); disengagement is effected by means of the release handle 16 which, rotating as has been explained around the pin 17, thrusts with its end 16 the hooking device 3, 4 and 5 which, in its turn, pre-loads the spring 6 downwards; during the downward stage the small windows 31 disengage from the teeth 32 of the fixed guide 12, freeing it from its attachment to the mobile guide 1 and permitting the latter to slide.

When the user has adjusted the seat to the required position, he/she lets go the release handle 16 so that the spring 6 thrusts the hooking/unhooking device upwards, which in its turn returns the release handle 16 to its initial position compressing its end 36 against the rubber element 11; this function is performed even in the case that abnormal hooking occurs on one side only.

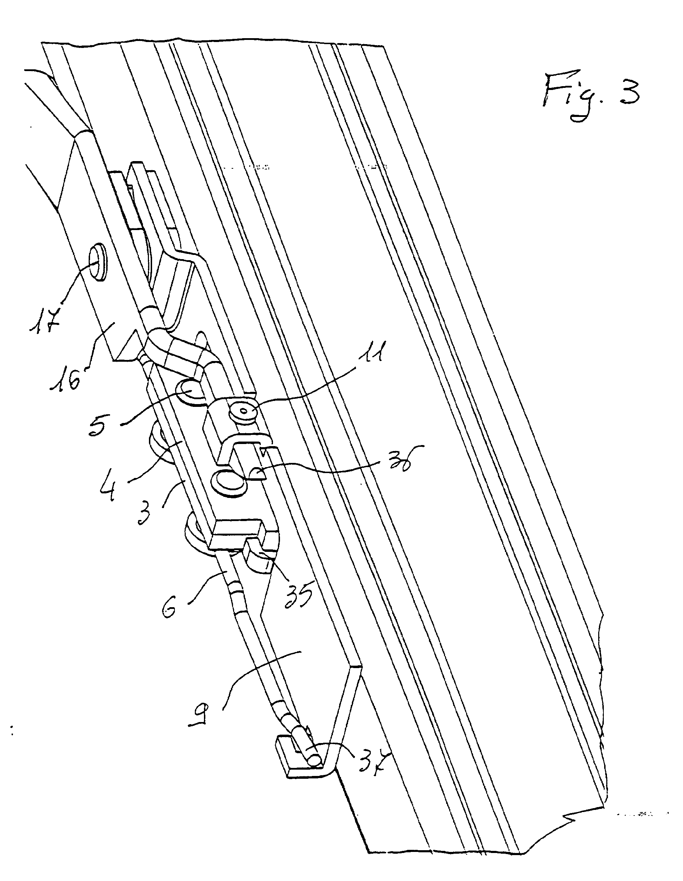

The spring 6 has in its central part a series of elbow sections (FIG. 4) which can be of a suitable form and section in function of the resistance to the activation force applied as requested under the terms of international regulations; the arrangement may be bulbous or square, and the central transverse and longitudinal sections of the spring are inserted into the containment seats of the pin 5 which fix between them the rack 3 and the plate 4, being inserted in their respective holes as shown in the drawing; while the end of the spring 6 is snap inserted into the appendices 37 (FIG. 3) of the element 9 guaranteeing in this way rapid and secure hooking.

A handle 16 has been illustrated as an activation device, but it should be understood that a solenoid or a cable, such as a Bowden cable, could be used in its place without altering the characteristics or operating principles of the device in any way whatsoever.

## Claims

1. A longitudinal regulating device for vehicle seats of the kind comprising a pair of fixed guides (12), fixedly connected to the understructure of the vehicle, and a pair of mobile guides (1), fixedly connected to the seat and able to slide along said fixed guides; between at least one fixed guide (12) and the respective mobile guide (1) being interposed at least one elastically yieldable hooking/release device (3, 4, 5,and 6), associated with the mobile guide (1); such device engaging, under normal operating conditions, with the toothing (32) of the fixed guide (12), hooking the mobile guide (1) in position; **characterised in that** the end (36) of an activation device (16) acts on an intermediate element (9), fixedly connected to said elastically yieldable device (3, 4, 5, 6) to disengage the latter from the toothing (32) of the fixed guide (12) and free the mobile guide (1); the release of said activation device (16) causing the return of the elastically yieldable device (3,4,5 and 6) to said normal operating conditions even in the case that abnormal hooking occurs on one side only.

2. A device according to Claim 1, **characterised by** the fact that said elastically yieldable device (3, 4, 5 and 6) present windows (31) suitable for crossing adjacent seats (33) of the mobile guide (1), to engage in the rack (32) of the fixed guide (12) and engage with further toothing (60) of the inner turned back edges of the mobile guide (1).

3. A device according to Claim 1, **characterised by** the fact that said elastically yieldable device (3, 4, 5 and 6) present guiding fins (34), suitable for being contained between corresponding fins (35) of the intermediate element (9).

4. A device according to Claim 1, **characterised by** the fact that said elastically yieldable device (3, 4, 5 and 6) is maintained in a pre-loaded state by a spring (6) with its two ends snap fixed onto the intermediate element (9) while its central part, substantially sinusoidal, co-operates with the appendices (5) of the elastically yieldable means.

5. A device according to the preceding claims, **characterised by** the fact that when the left and right mobile guides (1) are in the independent hooking position the spring (6) is correspondingly decompressed, while when the guides are in the unhooking position the elastically yieldable device (3, 4, 5 and 6) are compressed.

6. A device according to Claim 1, **characterised by** the fact that the activation device (16) is a handle.

7. A device according to Claim 6, **characterised by** the fact that the release handle (16) is pivotally connected to the mobile guide (1) by means of a pin (17) and an elastic gripper (10), snap fixed onto the intermediate element (9).

8. A device according to Claim 7, **characterised by** the fact that when in the resting position the ends (36) of the handle (16) are pre-loaded by the hooking/release device (3, 4, 5 and 6) against an anti-vibration rubber element.

## Patentansprüche

1. Längliche Verstellvorrichtung für Fahrzeugsitze der Art, die ein Paar unbeweglicher Führungsvorrichtungen (12) umfasst, welche mit dem Unterbau des Fahrzeugs fest verbunden sind, und ein Paar beweglicher Führungsvorrichtungen (1), welche mit dem Sitz fest verbunden und in der Lage sind, entlang der unbeweglichen Führungsvorrichtungen zu gleiten; wobei zwischen zumindest einer unbeweglichen Führungsvorrichtung (12) und der entsprechenden beweglichen Führungsvorrichtung (1) zumindest eine der beweglichen Führungsvorrichtung (1) zugeordnete elastisch nachgebende Einrast-/LÖse-Vorrichtung (3, 4, 5 und 6) angeordnet ist; wobei eine derartige Vorrichtung bei normalem Betriebszustand die Verzahnung (32) der unbeweglichen Führungsvorrichtung (12) in Eingriff nimmt und die unbewegliche Führungsvorrichtung (1) somit in Position einrastet, **dadurch gekennzeichnet, dass** das Ende (36) einer Aktivierungsvorrichtung (16) auf ein Zwischenelement (9) einwirkt, das mit der elastisch nachgebenden Vorrichtung (3, 4, 5, 6) fest verbunden ist, um Letztere aus der Verzahnung (32) der unbeweglichen Führungsvorrichtung (12) zu lösen und die bewegliche Führungsvorrichtung (1) freizugeben; wobei das Lösen der Aktivierungsvorrichtung (16) eine Rückkehr der elastisch nachgebenden Vorrichtung (3, 4, 5 und 6) in den normalen Betriebszustand auch in dem Fall veranlasst, dass ein unübliches Einrasten auf nur einer Seite erfolgt.

2. Vorrichtung nach Anspruch 1, **gekennzeichnet durch** die Tatsache, dass die elastisch nachgebende Vorrichtung (3, 4, 5 und 6) Aussparungen (31) aufweist, die geeignet sind für das Passieren benachbarter Aufnahmevorrichtungen (33) der beweglichen Führungsvorrichtung (1), um den Rahmen (32) der festen Führungsvorrichtung (12) in Eingriff zu nehmen und weitere Verzahnung (60) der nach innen gewandten rückwärtigen Kanten der beweglichen Führungsvorrichtung (1) in Eingriff zu nehmen.

3. Vorrichtung nach Anspruch 1, **gekennzeichnet durch** die Tatsache, dass die elastisch nachgebende Vorrichtung (3, 4, 5 und 6) Führungsrippen (34) aufweist, die geeignet sind, um zwischen entsprechenden Rippen (35) des Zwischenelements (9) aufgenommen zu werden.

4. Vorrichtung nach Anspruch 1, **gekennzeichnet durch** die Tatsache, dass die elastisch nachgebende Vorrichtung (3, 4, 5 und 6) **durch** eine Feder (6) in einem vorgespannten Zustand gehalten wird, deren beide Enden an dem Zwischenelement (9) schnappbefestigt sind, während ihr mittlerer Teil, der im Wesentlichen sinusförmig ist, mit den Ansatzstücken (5) des elastisch nachgebenden Mittels zusammenwirkt.

5. Vorrichtung nach den vorangehenden Ansprüchen, **gekennzeichnet durch** die Tatsache, dass, wenn sich die linke und die rechte bewegliche Führungsvorrichtung (1) in der unabhängigen Einrastposition befinden, die Feder (6) entsprechend dekomprimiert ist, während, wenn sich die Führungsvorrichtungen in der Ausrastposition befinden, die elastisch nachgebende Vorrichtung (3, 4, 5 und 6) komprimiert ist.

6. Vorrichtung nach Anspruch 1, **gekennzeichnet durch** die Tatsache, dass die Aktivierungsvorrichtung (16) ein Griff ist.

7. Vorrichtung nach Anspruch 6, **gekennzeichnet durch** die Tatsache, dass der Lösegriff (16) mit der beweglichen Führungsvorrichtung (1) mittels eines Zapfens (17) und eines an dem Zwischenelement schnappbefestigten elastischen Greifers (10) gelenkig verbunden ist.

8. Vorrichtung nach Anspruch 7, **gekennzeichnet durch** die Tatsache, dass in der Ruheposition die Enden (36) des Griffs (16) **durch** die Einrast-/Löse-Vorrichtung (3, 4, 5 und 6) gegen ein Antivibrationsgummielement vorgespannt sind.

## Revendications

1. Dispositif de réglage longitudinal pour des sièges de véhicule du type comprenant une paire de guidages fixes (12), reliés de façon fixe au soubassement du véhicule, et une paire de guidages mobiles (1), reliés de façon fixe au siège et pouvant coulisser le long desdits guidages fixes ; au moins un dispositif d'accrochage/libération déformable de façon élastique (3, 4, 5, et 6), associé au guidage mobile (1) étant interposé entre au moins an guidage fixe (12) et le guidage mobile respectif (1) ; un tel dispositif entrant en prise, dans des conditions normales de fonctionnement, avec la denture (32) du guidage fixe (12), accrochant le guidage mobile (1) en position
**caractérisé en ce que** l'extrémité (36) d'un dispositif d'activation (16) agit sur un élément intermédiaire (9), relié de façon fixe audit dispositif déformable de façon élastique (3, 4, 5, 6) pour disjoindre ce dernier de la denture (32) du guidage fixe (12) et libérer le guidage mobile (1) ; la libération dudit dispositif d'activation (16) entraînant le retour du dispositif déformable de façon élastique (3, 4, 5 et 6) auxdites conditions normales de fonctionnement même au cas où un accrochage anormal se produit sur un côté seulement.

2. Dispositif selon la revendication 1, **caractérisé par le fait que** ledit dispositif déformable de façon élastique (3, 4, 5 et 6) présente des fenêtres (31) appropriées pour traverser des sièges adjacents (33) du guidage mobile (1), pour entrer en prise avec la crémaillère (32) du guidage fixe (12) et entrer en prise avec une denture supplémentaire (60) des bords intérieurs retournés du guidage mobile (1).

3. Dispositif selon la revendication 1, **caractérisé par le fait que** ledit dispositif déformable de façon élastique (3, 4, 5 et 6) présente des ailettes de guidage (34), appropriées pour être contenues entre des ailettes correspondantes (35) de l'élément intermédiaire (9).

4. Dispositif selon La revendication 1, **caractérisé par le fait que** ledit dispositif déformable de façon élastique (3, 4, 5 et 6) est maintenu dans un état pré-chargé par un ressort (6) avec ses deux extrémités fixées par encliquetage sur l'élément intermédiaire (9) tandis que sa partie centrale, sensiblement sinusoïdale, coopère avec les appendices (5) des moyens déformables de façon élastique.

5. Dispositif selon les revendications précédentes, **caractérisé par le fait que**, lorsque les guidages mobiles gauche et droit (1) sont dans la position d'accrochage indépendante, le ressort (6) est détendu de façon correspondante, tandis que, lorsque les guidages sont dans la position de décrochage, le dispositif déformable de façon élastique (3, 4, 5 et 6) est comprimé.

6. Dispositif selon la revendication 1, **caractérisé par le fait que** le dispositif d'activation (16) est une poignée.

7. Dispositif selon la revendication 6, **caractérisé par le fait que** la poignée de libération (16) est reliée de façon pivotante au guidage mobile (1) au moyen d'une goupille (17) et un élément de préhension élastique (10), fixé par encliquetage sur l'élément intermédiaire (9).

8. Dispositif selon la revendication 7, **caractérisé par le fait que**, une fois dans la position de repos, les extrémités (36) de la poignée (16) sont pré-chargées par le dispositif d'accrochage/libération (3, 4, 5 et 6) contre un élément en caoutchouc anti-vibration.
